**Europäisches Patentamt**

**European Patent Office**

**Office européen des brevets**

(19)

(11) Veröffentlichungsnummer : **0 372 243 B1**

## (12) EUROPÄISCHE PATENTSCHRIFT

(45) Veröffentlichungstag der Patentschrift :
**06.05.92 Patentblatt 92/19**

(21) Anmeldenummer : **89120647.6**

(22) Anmeldetag : **08.11.89**

(51) Int. Cl.$^5$ : **A23L 1/185,** A23L 1/275, C12C 1/18

(54) Verfahren zur Herstellung eines dunklen Lebensmittels unddessen Verwendung.

(30) Priorität : **02.12.88 DE 3840586**

(43) Veröffentlichungstag der Anmeldung :
**13.06.90 Patentblatt 90/24**

(45) Bekanntmachung des Hinweises auf die Patenterteilung :
**06.05.92 Patentblatt 92/19**

(84) Benannte Vertragsstaaten :
**AT BE CH DE ES FR GB GR IT LI LU NL SE**

(56) Entgegenhaltungen :
**WO-A-80/02695**
**DD-A- 253 637**
**DE-A- 3 211 332**
**DE-C- 3 009 493**

(73) Patentinhaber : **Ireks GmbH**
**Lichtenfelser Strasse 20**
**W-8650 Kulmbach (DE)**

(72) Erfinder : **Meyer, Bernd, Dr. rer.nat.**
**Petzmannsberger Strasse 15**
**W-8650 Kulmbach (DE)**

(74) Vertreter : **Rau, Manfred, Dr. Dipl.-Ing. et al**
**Rau & Schneck, Patentanwälte Königstrasse 2**
**W-8500 Nürnberg 1 (DE)**

## Beschreibung

Die Erfindung betrifft ein Verfahren zur Herstellung eines dunklen zum Färben geeigneten Lebensmittels, dieses Lebensmittel selber und dessen Verwendung zum Färben.

Es ist bekannt und üblich, zahlreichen Lebens- oder Futtermitteln zur Verbesserung ihres Aussehens, ihrer Farbe, ihres Geschmackes, ihrer Akzeptanz und gegebenenfalls anderer sensorischer Eigenschaften Farbstoffe oder farbgebende, also färbende, Lebensmittel mit möglichst guten geschmacklichen oder zumindest geschmacksneutralen Eigenschaften zuzusetzen.

Zur Erzielung eines braunen Farbtones verwendet man hierfür sehr oft Zuckerkulöre verschiedener Arten. Daneben werden auch geröstete Produkte, wie Röstmalz und Röstgetreide, kakaohaltige Erzeugnisse, Kaffee-Erzeugnisse od.dgl. eingesetzt. Darüber hinaus werden auch Farbstoffe, wie Annato, Bixin, $\beta$-Carotin verwendet, die sich bei Wärmebehandlung braun verfärben. Außer Zuckerkulör sind diese Stoffe entweder nicht temperaturbeständig, wie z.B. $\beta$-Carotin, oder sie weisen eine zu geringe Farbkraft oder aber einen röstigen Nebengeschmack, einen grauen Farbton oder mehrere dieser negativen Eigenschaften auf. Außer Zuckerkulör wird auch Karamelzuckersirup eingesetzt, der allerdings eine geringere Farbkraft aufweist.

Zuckerkulöre und Karamelzuckersirup werden in der Regel durch Erhitzen von Zucker mit Säuren, Alkalien, Salzen, insbesondere Sulfiten und/oder Ammoniumsalzen, über einen längeren Zeitraum auf relativ hohe Temperaturen von 120 bis 180°C, meist 150 bis 180°C, hergestellt. Dabei bilden sich dunkel gefärbte Zuckerkulöre bzw. Karamelzuckersirupe, die um so dunkler sind, je länger die Behandlungszeit und/oder je höher die Behandlungstemperatur ist. Sie schmecken um so bitterer, je dunkler ihre Farbe ist. Karamelzuckersirupe haben eine geringere Farbkraft als Zuckerkulöre, wobei es ansonsten eine klare Abgrenzung zwischen diesen beiden Produkten nicht gibt. Da Zuckerkulöre nur zum Zweck der Färbung eingesetzt werden, gelten sie in lebensmittelrechtlicher Sicht als Farb- und Zusatzstoffe. Darüber hinaus bestehen bei den heute gegenüber Zusatz- und Farbstoffen kritisch gewordenen Verbrauchern gelegentlich Vorbehalte gegen bei der Zuckerkulörherstellung entstehende Nebenprodukte, wie z.B. das 4-Methylimidazol und andere Heterocyclen, die beim Einsatz von Ammoniak anfallen. In einigen Ländern ist daher für Grundnahrungsmittel der Einsatz von Zuckerkulör bzw. Karamelzuckersirup bereits untersagt, wie z.B. der Einsatz für Brot in Dänemark; in anderen Ländern, wie beispielsweise der Bundesrepublik Deutschland, wird ein solches Verbot erörtert und vorbereitet.

Aus der DE-PS 30 09 493 ist es bekannt, ein färbendes Malzprodukt durch Extraktion von geröstetem Malz herzustellen. Dabei handelt es sich um sogenannte Farbmalzauszüge, die durch Extraktion der löslichen Farbstoffe und Begleitstoffe aus geröstetem Malz gewonnen werden. Diese Farbmalzauszüge verursachen einen unangenehmen grau-braunen Farbton. Unter Farbmalzen versteht man Malze, die beim Darren mit sehr hoher Temperatur behandelt worden sind.

Es ist daher seit langem ein Bedürfnis, ein natürliches Lebensmittel, das keine Zusatzstoffe enthält und ohne solche Zusatzstoffe herstellbar ist, mit hoher Farbkraft und ansprechenden organoleptischen Eigenschaften herstellen zu können, um damit Lebensmitteln eine angenehm braune Färbung oder Bräunung zu verleihen, und zwar möglichst ohne eine graue Farbnuance.

Der Erfindung liegt daher die Aufgabe zugrunde, ein natürliches Lebensmittel mit hoher brauner Farbkraft und ansprechenden organoleptischen Eigenschaften ohne Verwendung von Zusatzstoffen herzustellen.

Diese Aufgabe konnte durch die Merkmale des Anspruches 1 gelöst werden. Überraschenderweise wurde gefunden, daß eine thermische Behandlung mit relativ gemäßigten Temperaturen über einen längeren Zeitraum des seit alters her sehr geschätzten und ernährungsphysiologisch hoch eingestuften Malzextrakts nach Zusatz von zerkleinertem Grünmalz oder zerkleinertem getrockneten Malz oder wässrigen Auszügen daraus zu einem sehr dunklen, braun färbenden Malzextrakt mit hoher Farbkraft führt. Es werden also keine malzfremden Zusätze oder gar Zusatzstoffe, wie Säuren, Alkalien, Salze od.dgl. bei der Behandlung zugesetzt. Diese dunklen Malzextrakte sind also reine Lebensmittel und ohne jegliche Zusatzstoffe hergestellt. Der Nachweis auf Zuckerkulör ist negativ. Sie besitzen einen guten, nicht bitteren Geschmack und verbessern durch ihren verbliebenen Zuckergehalt und andere Inhaltsstoffe den Geschmack und die Frischhaltung von Lebensmitteln, denen sie zugesetzt werden. Bei solchen Lebensmitteln der letztgenannten Art handelt es sich insbesondere um Backwaren, aber auch um Bonbons und andere Lebensmittel. Diese dunklen Malzextrakte sind daher sehr gut geeignet, Zuckerkulör, Karamelzuckersirup und andere bräunende Zusätze in Lebensmitteln und Futtermitteln zu ersetzen und dabei die sensorischen Eigenschaften dieser Lebens- und Futtermittel noch zu verbessern.

Überraschenderweise konnten durch die erfindungsgemäßen Maßnahmen dunkle Malzextrakte mit einer Farbkraft bis zu und über 25 000 EBC-Einheiten hergestellt werden. Die braunen Malzextrakte zeichnen sich durch einen angenehmen Braunton aus, den sie auch dem Lebensmittel vermitteln, zu dessen Färbung sie eingesetzt werden. Ein rotstichiges Aussehen, wie es insbesondere von den Karamelzuckersirupen bekannt ist, wird vermieden. Ebenso tritt keine Grautönung ein, wie sie von Röstprodukten, wie Farbmalz oder Röstgetreide, bekannt ist. Die braunen Malzextrakte können zur Einstellung der Farbtiefe, der Süße und der Viskosität auch mit anderen Zutaten, wie z.B. normalem üblichem Malzextrakt und Wasser gemischt werden, so daß die jeweils gewünschte Konsistenz, Farbe und Viskosität erzielt wird.

Die dunklen Malzextrakte können auch auf Trägerstoffe, wie Mehle, Quellmehle, Stärken, Maltodextrine usw. aufgebracht und daraus pulverförmige oder granulierte Erzeugnisse zum Einsatz in Lebens- oder Futtermitteln hergestellt werden. Eine solche Weiterverarbeitung kann z.B. auf Walzentrocknern, Extrudern, Wirbelbett-Trocknern oder Sprühtrocknern od.dgl. durchgeführt werden. Auch durch Mischung mit anderen Produkten, wie z.B. Röstgetreide, Röstmalz usw. können andere Farbschattierungen erzielt werden.

Da auch beim Einsatz des erfindungsgemäß erhaltenen Malzextrakts in Backwaren deren Geschmack und deren Frischhaltung verbessert werden, können diese dunklen Malzextrakte auch mit Vorteil als Bestandteil von Backmitteln, und zwar auch von gesäuerten Backmitteln, in flüssiger oder fester Form verwendet werden.

Als Ausgangs-Malzextrakt können nicht nur solche aus Gerstenmalz, sondern auch solche aus anderen Getreiden, wie Weizen, Roggen, Hafer, Mais, Reis und dgl. hergestellte Malze eingesetzt werden. Die Angaben in Gewichtsprozent (Gew.%) in den Ansprüchen 8 bis 10 beziehen sich jeweils auf Ausgangs-Malzextrakt mit einem Extraktanteil von 78 Gew.% bezogen auf das Gesamtgewicht des Malzextraktes, wobei der Rest Wasser ist.

Nachfolgend werden vier Ausführungsbeispiele der Erfindung näher erläutert. Zuvor werden einige Begriffe definiert.

"Malze" wird in der Weise hergestellt, daß Getreide, in Deutschland üblicherweise Gerste, in Wasser eingeweicht und nach ausreichender Wasseraufnahme zum Keimen gebracht wird. Dieses gekeimte Getreide wird als Grünmalz bezeichnet. Es ist noch feucht. Nach dem Trocknen (Darren) entsteht Malz, das lagerfähig ist.

"Malzextrakt" wird dadurch hergestellt, daß Malz geschrotet und danach mit Wasser zu einer Maische verrührt wird. Nach längerem Stehen bei höheren Temperaturen, beispielsweise 50 bis 78°C, bei denen die dem Malz eigenen Enzyme den größten Teil der Inhaltsstoffe des Malzes, vor allem der Stärke, löslich machen, wird diese Maische filtriert. Der abfiltrierten Flüssigkeit, dem Filtrat, wird ein großer Teil des Wassers entzogen, wodurch ein honiggelber sirupartiger Malzextrakt entsteht.

Die Angabe der Farbkraft in EBC-Einheiten erfolgt entsprechend den Definitionen der European Brewery Convention (EBC) (siehe "ANALYTICA-EBC", 3. Ausgabe 1975, Zürich, D 39 und BAUSCH/SILBEREISEN/BIELIG "Arbeitsvorschriften zur chemisch-brautechnischen Betriebskontrolle", Berlin 1963, Seiten 85,86.

## Beispiel 1:

1000 kg Malzextrakt aus Gerstenmalz mit einem Extraktgehalt von 78 Gew.% werden unter Rühren mit 25 kg zerkleinertem Grünmalz unter Rühren langsam auf 106 bis 112°C erhitzt, bis der Extraktgehalt, d.h. der Feststoffgehalt, 88 bis 90 Gew.% beträgt. Der Wassergehalt des eingesetzten Malzextrakts ist an sich nicht wesentlich, da der Wassergehalt auf jeden Fall durch Eindampfen soweit vermindert wird, daß der Extraktgehalt auf 88 bis 90% erhöht, der Extrakt also eingedickt wird. Die Behandlung erfolgt unter Atmosphärendruck. Durch einen Rückflußkühler wird vermieden, daß die vorstehend angegebene Temperatur überschritten wird und daß der Extraktgehalt höher als 88 bis 90% wird. Mit zunehmender Behandlungszeit bei der genannten Temperatur verdunkelt sich die Farbe des Malzextraktes. Nach 8 Stunden Behandlungszeit bei dieser Temperatur nahm die Viskosität deutlich zu. Nach 9 Stunden wurde eine Farbtiefe von etwa 20 000 EBC-Einheiten und nach 12 Stunden eine Farbtiefe von etwa 25 000 EBC-Einheiten erreicht. Nach Beendigung der thermischen Behandlung wurden die noch vorhandenen stark dunkel gefärbten Reste des Grünmalzes abgesiebt. Der erhaltene tief dunkel gefärbte Malzextrakt wird durch Zusatz von Wasser auf einen Extraktgehalt von 73 bis 74 Gew.% abgesenkt und ist dann auch bei Raumtemperatur gut gießfähig. Er weist dann eine Farbtiefe von 14 000 bis 17 000 EBC-Einheiten auf.

## Beispiel 2:

Beispiel 1 wurde dahingehend abgewandelt, daß anstelle von 25 kg Grünmalz 50 kg eingesetzt wurden. Bei ansonsten gleicher Verfahrensführung wurden hierbei nach 8 bzw. 10 Stunden thermischer Behandlung Farbtiefen von etwa 20 000 bzw. 25 000 EBC-Einheiten erreicht.

## Beispiel 3

Die Beispiele 1 und 2 wurden dahingehend abgewandelt, daß anstelle von zerkleinertem Grünmalz aus Gerste zerkleinertes Malz aus Gerste bei ansonsten gleichen Verfahrensbedingungen eingesetzt wurde. Die Ergebnisse waren annähernd gleich.

**Beispiel 4**

Die Beispiele 1 bis 3 wurden dahingehend abgewandelt, daß anstelle von zerkleinertem Grünmalz oder zerkleinertem Malz ein wässriger Auszug aus zerkleinertem Grünmalz oder zerkleinertem Malz eingesetzt wird.

Hierzu werden 100 kg zerkleinertes Grünmalz aus Gerste oder Weizen oder 100 kg gemahlenes Malz (aus Gerste oder Weizen) mit 100 bis 300 l Wasser verrührt und unter Rühren ein wässriger Auszug bereitet. Je nach Rührintensität ist dieser wässrige Auszug nach 10 Minuten bis 2 Stunden hergestellt. Bei Einsatz von Grünmalz kommt die kürzere Zeitdauer in Betracht. Das ungelöste Grünmalz bzw. Malz wird abgesiebt oder abfiltriert. Das Filtrat, d.h. der von den ungelösten Bestandteilen befreite wässrige Auszug wird zu den 1000 kg Malzextrakt hinzugegeben und dieses Gemisch unter Rühren in einem Kessel erhitzt. Man läßt hierbei so lange Wasser verdampfen, bis eine Temperatur im Bereich von 106 bis 112°C und damit ein Extraktgehalt von 88 bis 90% erreicht ist. Die weitere Behandlung erfolgt wie bei den Beispielen 1 bis 3 mit den gleichen Ergebnissen wie dort. Zur Erhöhung der Gießfähigkeit, also Verringerung der Viskosität, werden 260 l Wasser zugesetzt. Der so erhaltene Malzextrakt hat eine Farbstärke von etwa 16 500 EBC-Einheiten. Wenn gleichzeitig der Geschmack des dunklen Malzextraktes noch weiter verbessert werden soll, so können stattdessen beispielsweise 360 kg normaler Malzextrakt und ca. 240 l Wasser zugesetzt werden. Nach dem Durchrühren erhält man einen dunklen, gut gießfähigen Malzextrakt mit einer Farbkraft von 12 000 bis 14 000 EBC-Einheiten.

Bei allen Versuchen wurde der Extraktgehalt jeweils refraktometrisch bestimmt.

Die dunklen erhaltenen Malzextrakte werden zur Herstellung von Brot oder zur Herstellung von anderen Backwaren in einer Menge von 0,5 bis 5 Gew.% bezogen auf die eingesetzte Mehlmenge, bei der Teigbereitung zugesetzt. Andere Dosierungshöhen sind ohne weiteres möglich. Man erhält hierbei Brote und Gebäcke mit angenehm brauner Krumenfarbe, gutem abgerundetem Geschmack und langer Frischhaltung. Für Lebkuchen, Dauerbackwaren, Kuchen, Bonbons, Getränke (Bier und Cola-Getränke) sowie andere Lebens- und Futtermittel können die erhaltenen Malzextrakte in flüssiger oder fester Form eingesetzt werden.

## Patentansprüche

1. Verfahren zur Herstellung eines dunklen Lebensmittels, dadurch gekennzeichnet, daß ein Ausgangs-Malzextrakt mit zerkleinertem Grünmalz und/oder zerkleinertem Malz und/oder wässrigen Auszügen von zerkleinertem Grünmalz und/oder zerkleinertem Malz gemischt und auf eine Temperatur von 90 bis 120°C erhitzt und unter Rühren so lange auf dieser Temperatur gehalten wird, bis das Gemisch eine starke dunkle Färbung annimmt.

2. Verfahren nach Anspruch 1, dadurch gekennzeichnet, daß die Erhitzung auf eine Temperatur von 100 bis 115°C erfolgt.

3. Verfahren nach Anspruch 2, dadurch gekennzeichnet, daß die Erhitzung auf eine Temperatur von 105 bis 112°C erfolgt.

4. Verfahren nach Anspruch 1, dadurch gekennzeichnet, daß die Erhitzung über 5 bis 20 Stunden erfolgt.

5. Verfahren nach Anspruch 4, dadurch gekennzeichnet, daß die Erhitzung über 8 bis 12 Stunden erfolgt.

6. Verfahren nach Anspruch 1, dadurch gekennzeichnet, daß Ausgangs-Malzextrakt aus Getreidemalz verwendet wird.

7. Verfahren nach Anspruch 6, dadurch gekennzeichnet, daß Ausgangs-Malzextrakt aus Gersten-, Weizen- oder Roggenmalz verwendet wird.

8. Verfahren nach Anspruch 1, dadurch gekennzeichnet, daß 1 bis 50 Gew.% (Gewichtsprozent) bezogen auf das Ausgangs-Malzextrakt an zerkleinertem Grünmalz oder zerkleinertem Malz eingesetzt werden.

9. Verfahren nach Anspruch 8, dadurch gekennzeichnet, daß 2,5 bis 15 Gew.% bezogen auf das Ausgangs-Malzextrakt an zerkleinertem Grünmalz oder zerkleinertem Malz eingesetzt werden.

10. Verfahren nach Anspruch 1, dadurch gekennzeichnet, daß ein wässriger Auszug aus 2,5 bis 15 Gew.% bezogen auf das Ausgangs-Malzextrakt aus zerkleinertem Grünmalz oder zerkleinertem Malz eingesetzt wird.

11. Verfahren nach einem der Ansprüche 1 bis 10, dadurch gekennzeichnet, daß die Temperaturbehandlung bei einem Extraktgehalt von 88 bis 90 Gew.% erfolgt.

12. Dunkles Lebensmittel hergestellt durch Erhitzung eines Ausgangs-Malzextrakts mit zerkleinertem Grünmalz und/oder zerkleinertem Malz und/oder wässrigen Auszügen von zerkleinertem Grünmalz und/oder zerkleinertem Malz auf 90 bis 120°C über einen Zeitraum, bis das Gemisch eine starke dunkle Färbung angenommen hat.

13. Verwendung eines nach dem Verfahren gemäß den Ansprüchen 1 bis 11 hergestellten dunklen Lebensmittels als färbender Zusatz zu Lebensmitteln, insbesondere Backwaren.


## Claims

1. Method for the production of a dark foodstuff, <u>characterized in that</u> a starting malt extract is mixed with comminuted green malt and/or comminuted malt and/or aqueous extracts of comminuted green malt and/or comminuted malt and is heated to a temperature of 90 to 120°C and is kept at this temperature with agitation, until the mixture takes on a strong dark colouring.

2. Method according to claim 1, <u>characterized in that</u> heating is carried out to a temperature of 100 to 115°C.

3. Method according to claim 2, <u>characterized in that</u> heating is carried out to a temperature of 105 to 112°C.

4. Method according to claim 1, <u>characterized in that</u> heating is carried out for 5 to 20 hours.

5. Method according to claim 4, <u>characterized in that</u> heating is carried out for 8 to 20 hours.

6. Method according to claim 1, <u>characterized in that</u> a starting malt extract of malted cereals is used.

7. Method according to claim 6, <u>characterized in that</u> a starting malt extract of malted barley, malted wheat or malted rye is used.

8. Method according to claim 1, <u>characterized in that</u> comminuted green malt or comminuted malt are used in an amount of 1 to 50 % by weight related to the starting malt extract.

9. Method according to claim 8, <u>characterized in that</u> comminuted green malt or comminuted malt are used in an amount of 2.5 to 15 % by weight related to the starting malt extract.

10. Method according to claim 1, <u>characterized in that</u> an aqueous extract of comminuted green malt or comminuted malt is used, the aqueous extract being made of comminuted green malt or comminuted malt in an amount of 2.5 to 15 % by weight related to the starting malt extract.

11. Method according to one of claim 1 to 10, <u>characterized in that</u> the temperature treatment is carried out with an extract content of 88 to 90 % by weight.

12. Dark foodstuff produced by heating of a starting malt extract with comminuted green malt and/or comminuted malt and/or aqueous extracts of comminuted green malt and/or comminuted malt to 90 to 120°C over a period of time, until the mixture has taken on a strong dark colouring.

13. Use of a dark foodstuff produced in accordance with the method according to claims 1 to 11 as a colouring admixture in foodstuffs, in particular breads and pastries.


## Revendications

1. Procédé pour la préparation d'un aliment de couleur foncée, caractérisé en ce que l'on mélange un extrait de malt initial avec du malt vert broyé et/ou du malt broyé et/ou des extraits aqueux de malt vert broyé et/ou de malt broyé, et on chauffe le mélange à une température de 90 à 120°C et on le maintient sous agitation à cette température jusqu'à ce qu'il prenne une couleur très foncée.

2. Procédé selon la revendication 1, caractérisé en ce que le chauffage est effectué à une température de 100 à 115°C.

3. Procédé selon la revendication 2, caractérisé en ce que le chauffage est effectué à une température de 105 à 112°C.

4. Procédé selon la revendication 1, caractérisé en ce que le chauffage est effectué pendant 5 à 20 heures.

5. Procédé selon la revendication 4, caractérisé en ce que le chauffage est effectué pendant 8 à 12 heures.

6. Procédé selon la revendication 1, caractérisé en ce que l'on utilise un extrait de malt initial provenant de malt de céréale.

7. Procédé selon la revendication 6, caractérisé en ce que l'on utilise un extrait de malt initial provenant de malt d'orge, de froment ou de seigle.

8. Procédé selon la revendication 1, caractérisé en ce que l'on utilise de 1 à 50 % en poids, par rapport à l'extrait de malt initial, de malt vert broyé ou de malt broyé.

9. Procédé selon la revendication 8, caractérisé en ce que l'on utilise de 2,5 à 15 % en poids, par rapport à l'extrait de malt initial, de malt vert broyé ou de malt broyé.

10. Procédé selon la revendication 1, caractérisé en ce que l'on utilise un extrait aqueux constitué de 2,5 à 15 % en poids, par rapport à l'extrait de malt initial, provenant de malt vert broyé ou de malt broyé.

11. Procédé selon l'une des revendications 1 à 10, caractérisé en ce que le traitement thermique est effectué à une teneur en extrait de 88 % 90 % en poids.

12. Aliment de couleur foncée, préparé par chauffage d'un extrait de malt initial avec du malt vert broyé et/ou du malt broyé et/ou des extraits aqueux de malt vert broyé et/ou de malt broyé, à 90-120°C pendant une durée allant jusqu'à ce que le mélange prenne une couleur très foncée.

13. Utilisation d'un aliment de couleur foncée préparé selon le procédé conforme aux revendications 1 à 11, en tant qu'additif colorant à des produits alimentaires, en particulier produits de boulangerie.